# EUROPEAN PATENT SPECIFICATION

(11) **EP 3 545 759 B1**
(45) Date of publication and mention of the grant of the patent: **19.10.2022**
(21) Application number: 19166151.1
(22) Date of filing: 29.03.2019
(51) Int. Cl.: A01M 7/00

(54) **TRAILED TANK FOR THE SPRAYING OF PLANT PROTECTION AND FERTILIZING PRODUCTS**
ANHÄNGETANK FÜR DAS VERSPRÜHEN VON PFLANZENSCHUTZ- UND DÜNGEMITTELN
CUVE TRAÎNÉE POUR LA PULVÉRISATION DE PRODUITS PHYTOSANITAIRES ET FERTILISANTS

(30) Priority: 30.03.2018 IT 201800004157
(43) Date of publication of application: 02.10.2019
(73) Proprietor: Verzellesi S.r.l., 42012 Campagnola Emilia (RE) (IT)
(72) Inventor: VERZELLESI, Adriano, 42012 Campagnola Emilia (RE) (IT)
(74) Representative: Brunacci, Marco

(56) References cited:
- EP-A1- 2 319 304
- EP-A1- 3 269 240
- EP-A2- 0 161 688
- DE-U1-202006 010 074

## Description

The present invention relates to a trailed tank for the spraying of plant protection and fertilizing products.

It is well known that most of plant protection and fertilizing preparations to be administered to the soils and/or to the plant species are distributed through the use of equipment which is based on the dispersion of the plant protection and/or fertilizing products in a liquid, usually water, contained inside a reservoir; the compound obtained is then sprayed on the soils or on the plants on which one wishes to operate, by means of tanks mounted on wheels and trailed by a machine or a tractor.

An example of such a trailed tank is disclosed in EP 3 269 240 A1.

These techniques of known type do have a number of drawbacks.

Plant protection and/or fertilizing products, in fact, are usually manually inserted by the operator on board the tank, mixing these with the liquid present in the reservoir.

This procedure requires the operator to directly handle the plant protection and/or fertilizing products, directly exposing themselves to any hazard thereof and incurring in possible health problems.

Moreover, the technology in use is often made difficult by the occurrence of ineffective and not long-lasting mixing phenomena between the liquid and the plant protection and/or fertilizing products; therefore, it is sometimes necessary to insert in the reservoir at least one stirring system to keep the compound as homogeneous as possible and to prevent the plant protection and/or fertilizing products from depositing on the bottom of the reservoir.

These deposits of plant protection and/or fertilizing products at the bottom of the reservoir constitute a special hazardous waste which must be disposed of in accordance with specific procedures.

In addition, according to this known technique, the reservoir, the pumping system and the hydraulic systems for handling liquids always operate in contact with the product to be sprayed; this situation can cause problems of wear and/or damage to these systems, as well as requiring frequent and costly maintenance and cleaning operations.

In order to overcome these drawbacks only in part, a second reservoir is inconveniently provided which is associated with the first one, in which clean water is stored and used to wash the components.

Recently, mixing assemblies have been introduced that provide for the insertion of plant protection and/or fertilizing products in the liquid to be sprayed on the plants without the intervention of the operator and without the need to mix the plant protection and/or fertilizing products with all the liquid in the reservoir. These mixing assemblies consist of special hoppers wherein the plant protection and/or fertilizing products are contained and providing for their in-line injection in the liquid.

The incorporation of these mixing assemblies into the existing reservoirs is however rather complex, as the existing reservoirs are often not suitable for use; this results in appliances with non-homogeneous geometrical shapes, wherein the space on board the tank is not exploited to the best.

It should also be noticed that non-homogeneous geometrical shapes often have overall dimensions and protrusions that can impact and damage the plant species and plants in general on which the tank is towed, as well as risk to jeopardize the integrity and proper operation of the mixing assemblies.

The main aim of the present invention is to devise a trailed tank for the spraying of plant protection and fertilizing products which has a homogeneous geometric arrangement and high space optimization.

Another object of the present invention is to devise a trailed tank for the spraying of plant protection and fertilizing products that limits the degree of exposure of the operator to the plant protection and/or fertilizing products.

Another object of the present invention is to devise a trailed tank for the spraying of plant protection and fertilizing products that does not require the stirring systems necessary to keep homogeneous the product to be sprayed.

Another object of the present invention is to devise a trailed tank for the spraying of plant protection and/or fertilizing products that will reduce the number of maintenance and cleaning operations and, at the same time, make these faster, safer and less difficult.

Another object of the present invention is to devise a trailed tank for the spraying of plant protection and/or fertilizing products that allows overcoming the mentioned drawbacks of the prior art in the context of a simple, rational, easy, effective to use and low cost solution.

The aforementioned objects are achieved by the present invention having the characteristics of claim 1.

Other characteristics and advantages of the present invention will be more evident from the description of some preferred, but not exclusive, embodiments of a trailed tank for the spraying of plant protection and fertilizing products, illustrated by way of an indicative, but non-limiting example, in the attached tables of drawings in which:
Figure 1 is an axonometric view of a first embodiment of the trailed tank according to the invention;
Figure 2 is a cross-sectional view of the total upper surface of the trailed tank shown in Figure 1;
Figure 3 is an exploded view of the trailed tank in Figure 1;
Figure 4 is a partly split axonometric view of the trailed tank in Figure 1;
Figure 5 is an axonometric view of a second embodiment of the trailed tank according to the invention;
Figure 6 is an exploded view of the trailed tank in Figure 5.

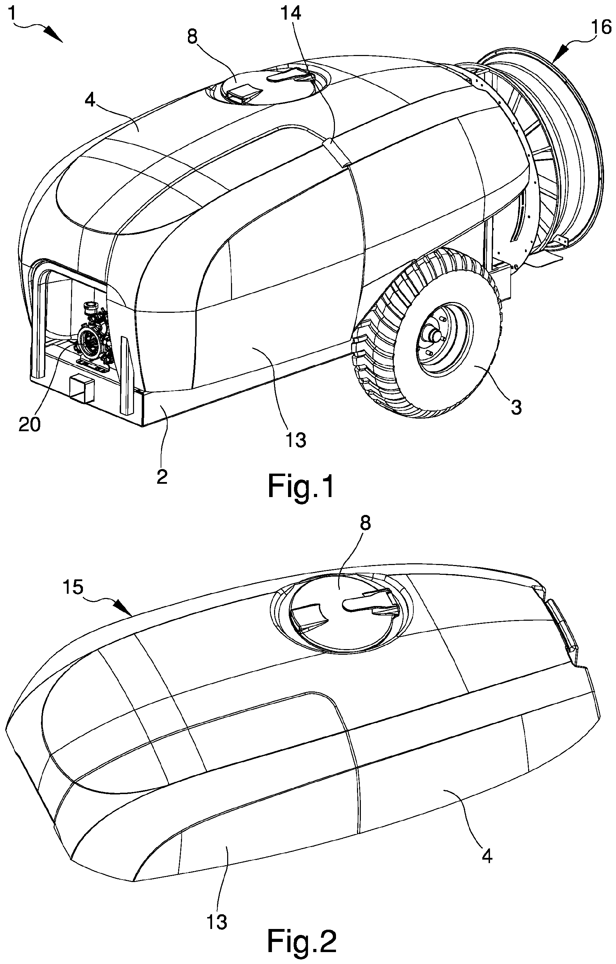

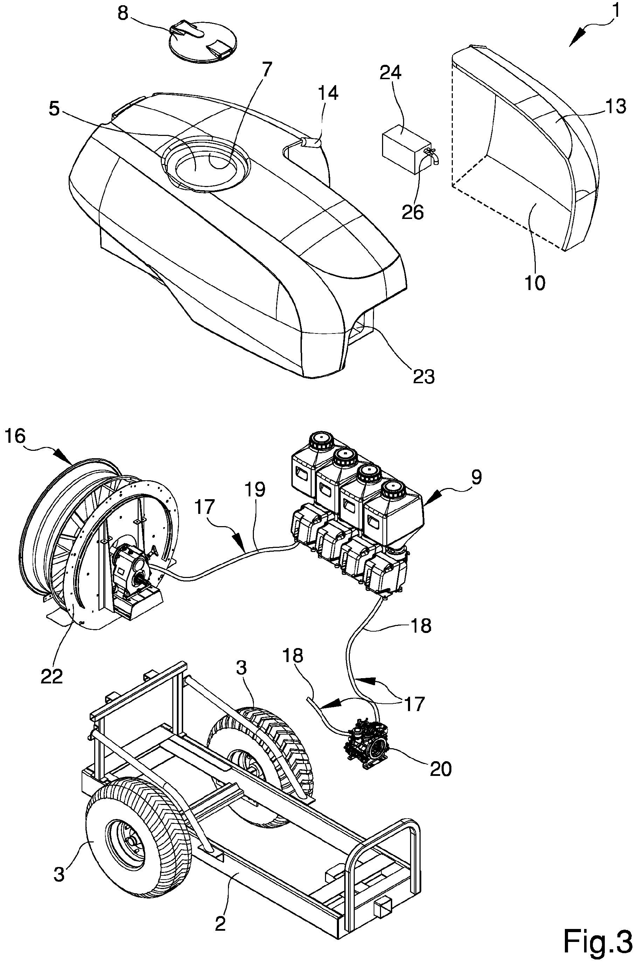

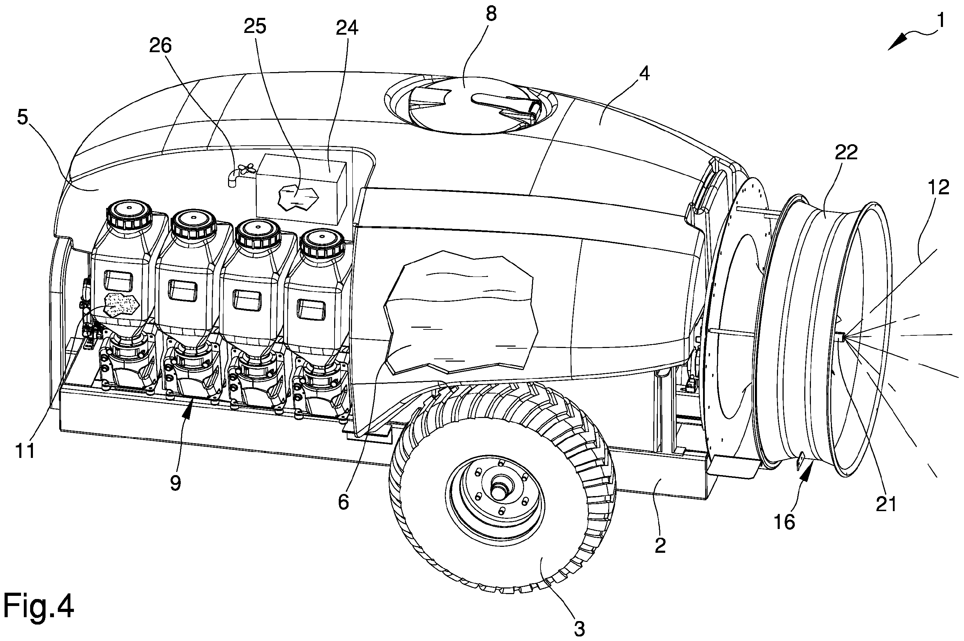

With particular reference to the embodiment shown in Figures 1 to 4, reference numeral 1 globally indicates a trailed tank for the spraying of plant protection and fertilizing products.

The tank 1 is intended to be towed by a machine, e.g. an agricultural tractor or other motorized vehicle.

The direction and the way of standard forward movement of the machine on the ground defines the normal way of travel of the trailed tank 1, with respect to which it is possible to define a front portion and a rear portion of the same, as well as a right side and a left side.

The trailed tank 1 comprises a base frame 2 with which movement means 3 are associated that implement the movement of the base frame 2 onto the ground. Advantageously, the movement means 3 comprise two or more wheels; alternative types of movement means cannot however be ruled out, such as crawler tracks or slides.

Usefully, the trailed tank 1 comprises a reservoir 4 which is associated with the base frame 2 and defines a first volume 5 for containing a liquid 6.

The liquid 6 is preferably water, but not necessarily clean or drinkable water, as it may also be water taken from a ditch or from a canal.

Usefully, the reservoir 4 has at least one filling opening 7 with which a closing member 8 is associable.

The filling opening 7 allows the reservoir 4 to be filled with the liquid 6.

The tank 1 also comprises a mixing assembly 9 which is associated with the base frame 2 and is housed in a second volume 10.

The mixing assembly 9 mixes the liquid 6 with at least one plant protection and/or fertilizing product 11 to obtain a product to be sprinkled 12.

The tank 1 also comprises at least one opening/closing element 13 of the second volume 10; the opening/closing element 13 is movable between an opening configuration, wherein the second volume 10 is open to allow access to the mixing assembly 9, and a closing configuration, wherein the second volume 10 is closed.

The opening/closing element 13 is associated, e.g., with at least one element selected out of the reservoir 4 and the base frame 2, preferably the reservoir 4, by means of hinging means 14.

Thanks to the hinging means 14, the opening/closing element 13 can be rotated with respect to the reservoir 4 like a door, to open and close the second volume 10.

The reservoir 4 and the opening/closing element 13 in the closure configuration define an overall upper surface 15 of substantially convex conformation.

The substantially convex conformation of the overall upper surface 15 means that there are no protruding portions of the tank 1 that can come into contact with the vegetal species and plants present in the soils along which the tank 1 is towed.

According to the present invention, the second volume 10 extends upwards from the base frame 2 to the overall upper surface 15.

In practice, the first volume 5 and the second volume 10 are separated by substantially vertical walls of the reservoir 4, with the second volume 10 corresponding to a cavity formed in the reservoir 4.

The particular geometrical configuration of the first volume 5 and of the second volume 10 usefully optimizes the geometry and helps to make the most of the space on board the trailed tank 1.

The trailed tank 1 also comprises a spraying assembly 16 adapted to spray the product to be sprinkled 12; the spraying assembly 16 is associated with the base frame 2.

The trailed tank 1 also comprises a hydraulic circuit 17 which is fluid-dynamically connected to the reservoir 4, to the mixing assembly 9 and to the spraying assembly 16.

The hydraulic circuit 17 comprises at least a first channel 18, which extends between the reservoir 4 and the mixing assembly 9, and at least a second channel 19, which extends between the mixing assembly 9 and the spraying assembly 16.

The hydraulic circuit 17 comprises a pumping device 20 arranged along at least one of the first channel 18 and the second channel 19.

In practice, the pumping device 20 allows the liquid 6 to be sucked from the reservoir 4, to make it pass through the mixing assembly 9 and then to send the product to be sprinkled 12 to the spraying assembly 16 to be delivered in the air in the outside environment.

Alternative embodiments cannot however be ruled out wherein the pumping device 20 on board the trailer tank 1 is not provided, but the reservoir 4 is pressurized and can deliver the liquid 6 by simply opening a controlled valve. Advantageously, the pumping device 20 is located along the first channel 18 and only comes into contact with the liquid 6 without ever coming into contact with either the plant protection and/or fertilizing product 11 or with the product to be sprinkled 12, allowing the pumping device 20 to be kept clean.

More in detail, the first channel 18 consists of two sections: a first section extending from the reservoir 4 to the pumping device 20, and a second section extending from the pumping device 20 to the mixing assembly 9.

The pumping device 20 is usefully positioned in the front part of the base frame 2, so as to be closer to the tractor and to be more easily associable with a drive shaft with which the tractor itself is provided.

The pumping device 20, in practice, receives motion from the drive shaft of the tractor and it is not necessary to provide an autonomous motorization system mounted on board the trailed tank 1.

Advantageously, the spraying assembly 16 comprises at least one dispersion nozzle 21, adapted for the outflow of the product to be sprinkled 12 from the hydraulic circuit 17, and at least one dispersion device 22, adapted to disperse the product to be sprinkled 12 in the air.

The spraying assembly 16 preferably comprises a plurality of dispersion nozzles 21.

The dispersion nozzles 21, in practice, define the ending portion of the hydraulic circuit 17 and are configured to spray the product to be sprinkled 12 when leaving the hydraulic circuit.

The dispersion device 22, on the other hand, preferably consists of a fan.

The spraying assembly 16 is located at the rear part of the base frame 2 and is driven by a drive shaft connecting the pumping device 20 to the dispersion device 22, possibly by interposition of a rotation speed multiplying device.

The reservoir 4 therefore has a through hole 23 that crosses the reservoir itself along the front-rear direction of the trailed tank 1 and allows the passage of the transmission shaft.

Alternative embodiments cannot however be ruled out wherein the dispersion device 22 is not present or is placed on the base frame 2 in a different position.

The trailed tank 1 usefully comprises at least one container 24 for containing the washing water 25, the container being housed in the second volume 10; the container 24 is associated with at least one tap 26 for dispensing washing water 25.

The washing water 25 is clean water and can be used by the user of the trailed tank 1 for hand washing or other purposes.

The container 24 has at least one filling mouth with which at least one closing member is associable.

Advantageously, the second volume 10 is located in the front left portion of the base frame 2.

This way it is easier for the operator to carry out his/her work, since most tractors allow the vehicle to be boarded and alight from it on the left side; therefore, if it is necessary to access the second volume 10 while towing the tank 1, the movements that the operator must carry out are reduced to a minimum.

Alternative embodiments of the invention cannot be ruled out wherein the second volume 10 is placed differently.

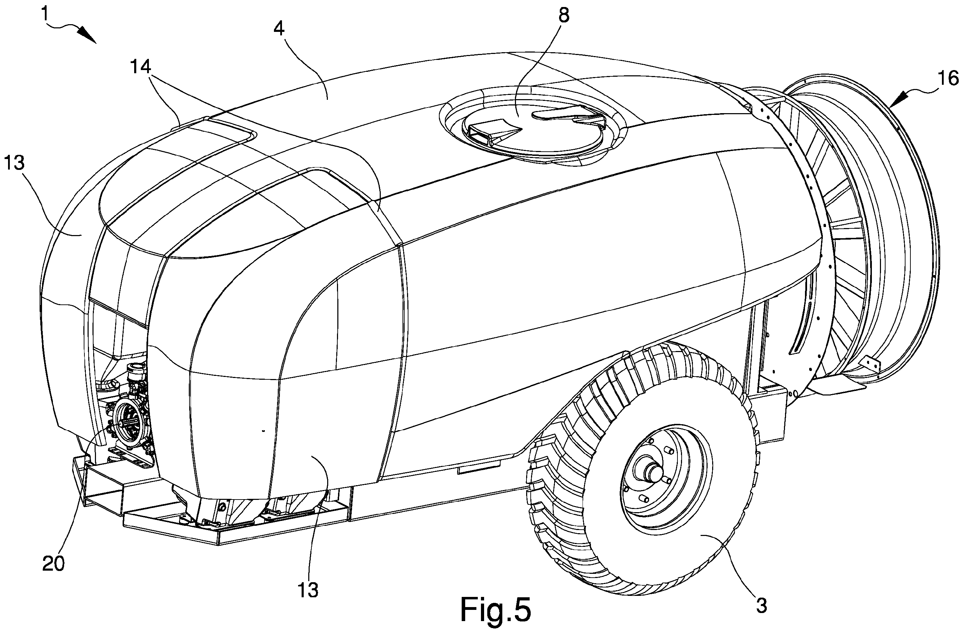

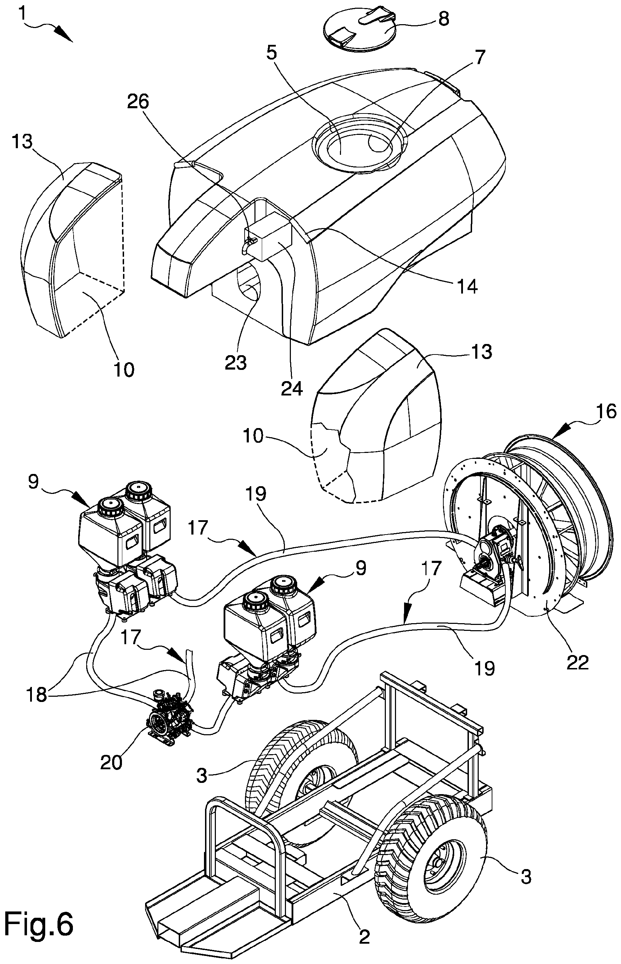

Figures 5 and 6, for example, show a second embodiment of the trailed tank 1, wherein identical components to the first embodiment, as well as components that are structurally different but functionally similar, have the same reference numerals as the first embodiment, the full description of which is given in full.

The second embodiment differs from the first one mainly by the fact that the mixing assembly 9 is divided into at least two mixing sub-assemblies 9, housed in their respective second volumes 10; a second volume 10 is placed on a front left portion of the base frame 2 and the other second volume 10 is placed on a front right portion of the base frame 2.

Correspondingly, in the second embodiment, there are at least two opening/closing elements 13 each associated with a respective second volume 10.

In addition, the first channel 18 is divided into two second sections extending from the pumping device 20 to the two mixing sub-assemblies 9 and there are two second channels 19 connecting the mixing sub-assemblies 9 with the spraying assembly 16.

Usefully, in the second embodiment, the components are placed on board the trailed tank 1 in a symmetrical manner with respect to a vertical front-rear plane, resulting in a more balanced distribution of the components.

## Claims

1. Trailed tank (1) for the spraying of plant protection and fertilizing products, comprising:
- a base frame (2);
- movement means (3), associated with said base frame (2) and adapted to move said base frame (2) on the ground;
- a reservoir (4) associated with said base frame (2) and defining a first volume (5) for containing a liquid (6);
- a mixing assembly (9) associated with said base frame (2) and housed in a second volume (10), said mixing assembly (9) being adapted to mix said liquid (6) with at least one plant protection and/or fertilizing product (11) to obtain a product to be sprinkled (12);
- a spraying assembly (16) of said product to be sprinkled (12) which is associated with said base frame (2);
- a hydraulic circuit (17), fluid-dynamically connected to said reservoir (4), to said mixing assembly (9) and to said spraying assembly (16);
**characterized by** the fact that it comprises an opening/closing element (13) of said second volume (10), said opening/closing element (13) being movable between an opening configuration, wherein said second volume (10) is open for the access to said mixing assembly (9), and a closing configuration, wherein said second volume (10) is closed;
wherein said reservoir (4) and said opening/closing element (13) in said closure configuration define an overall upper surface (15) of substantially convex conformation; and
wherein said second volume (10) extends upwards from said base frame (2) to said overall upper surface (15).

2. Trailed tank (1) according to claim 1, wherein said reservoir (4) has at least one filling opening (7) with which a closing member (8) is associable.

3. Trailed tank (1) according to one or more of the preceding claims, wherein hydraulic circuit (17) comprises:
- at least a first channel (18), which extends between said reservoir (4) and said mixing assembly (9);
- at least a second channel (19), which extends between said mixing assembly (9) and said spraying assembly (16).

4. Trailed tank (1) according to one or more of the preceding claims, wherein said hydraulic circuit (17) comprises a pumping device (20) arranged along at least one of said first channel (18) and said second channel (19).

5. Trailed tank (1) according to one or more of the preceding claims, wherein said spraying assembly (16) comprises:
- at least one dispersion nozzle (21), adapted for the outflow of said product to be sprinkled (12) from said hydraulic circuit (17);
- at least one dispersion device (22), adapted to disperse said product to be sprinkled (12) in the air.

6. Trailed tank (1) according to one or more of the preceding claims, wherein said opening/closing element (13) is associated with at least one of said reservoir (4) and said base frame (2) by means of hinging means (14).

7. Trailed tank (1) according to one or more of the preceding claims, wherein it comprises at least one container (24) for containing washing water (25), said container (24) being housed in said second volume (10) and being associated with at least one tap (26) for dispensing said washing water (25).

8. Trailed tank (1) according to one or more of the preceding claims, wherein said second volume (10) is located on the left portion of said base frame (2) defined with respect to the normal running direction of said trailed tank (1).

9. Trailed tank (1) according to one or more of the preceding claims, wherein said mixing assembly (9) is divided into at least two mixing sub-assemblies (9), housed in respective second volumes (10), wherein a second volume (10) is placed on a left portion of said base frame (2) and the other second volume (10) is placed on a right portion of said base frame (2), said left portion and said right portion being defined with respect to the normal running direction of said trailed tank.

## Patentansprüche

1. Anhängertank (1) zum Versprühen von Pflanzenschutz- und Düngemitteln, umfassend:
- einen Grundrahmen (2);
- Bewegungsmittel (3), die dem Grundrahmen (2) zugeordnet und geeignet sind, den Grundrahmen (2) auf dem Boden zu bewegen;
- einen Vorratsbehälter (4), der dem Grundrahmen (2) zugeordnet ist und ein erstes Volumen (5) zur Aufnahme einer Flüssigkeit (6) definiert;
- eine Mischanordnung (9), die dem Grundrahmen (2) zugeordnet ist und in einem zweiten Volumen (10) untergebracht ist, wobei die Mischanordnung (9) ausgebildet ist, die Flüssigkeit (6) mit mindestens einem Pflanzenschutz- und/oder Düngemittel (11) zu mischen, um ein zu versprühendes Produkt (12) zu erhalten;
- eine Sprühanordnung (16) für das zu versprühende Produkt (12), die dem Grundrahmen (2) zugeordnet ist;
- einen Hydraulikkreislauf (17), der fluiddynamisch mit dem Vorratsbehälter (4), der Mischanordnung (9) und der Sprühanordnung (16) verbunden ist;
**dadurch gekennzeichnet, dass** er ein Öffnungs-/Schließelement (13) des zweiten Volumens (10) umfasst, wobei das Öffnungs-/Schließelement (13) zwischen einer Öffnungskonfiguration, in der das zweite Volumen (10) für den Zugang zu der Mischanordnung (9) offen ist, und einer Schließkonfiguration beweglich ist, in der das zweite Volumen (10) geschlossen ist;
wobei der Vorratsbehälter (4) und das Öffnungs-/Schließelement (13) in der Schließkonfiguration eine obere Gesamtfläche (15) von im Wesentlichen konvexer Form definieren; und
wobei sich das zweite Volumen (10) von dem Grundrahmen (2) nach oben zu der oberen Gesamtfläche (15) erstreckt.

2. Anhängertank (1) nach Anspruch 1, wobei der Vorratsbehälter (4) mindestens eine Einfüllöffnung (7) aufweist, der ein Verschlusselement (8) zuordnenbar ist.

3. Anhängertank (1) nach einem oder mehreren der vorhergehenden Ansprüche, wobei der Hydraulikkreislauf (17) umfasst:
- mindestens einen ersten Kanal (18), der sich zwischen dem Vorratsbehälter (4) und der Mischanordnung (9) erstreckt;
- mindestens einen zweiten Kanal (19), der sich zwischen der Mischanordnung (9) und der Sprühanordnung (16) erstreckt.

4. Anhängertank (1) nach einem oder mehreren der vorhergehenden Ansprüche, wobei der Hydraulikkreislauf (17) eine Pumpvorrichtung (20) umfasst, die entlang des ersten Kanals (18) und/oder des zweiten Kanals (19) angeordnet ist.

5. Anhängertank (1) nach einem oder mehreren der vorangehenden Ansprüche, wobei die Sprühanordnung (16) umfasst:
- mindestens eine Dispersionsdüse (21), die für den Ausfluss des zu versprühenden Produkts (12) aus dem Hydraulikkreislauf (17) ausgebildet ist;
- mindestens eine Dispersionsvorrichtung (22), die ausgebildet ist, das zu versprühende Produkt (12) in der Luft zu verteilen.

6. Anhängertank (1) nach einem oder mehreren der vorhergehenden Ansprüche, wobei das Öffnungs-/Schließelement (13) mit dem Vorratsbehälter (4) und/oder dem Grundrahmen (2) mittels Scharniermitteln (14) verbunden ist.

7. Anhängertank (1) nach einem oder mehreren der vorhergehenden Ansprüche, wobei er mindestens einen Behälter (24) zur Aufnahme von Waschwasser (25) umfasst, wobei der Behälter (24) in dem zweiten Volumen (10) untergebracht ist und mindestens einem Hahn (26) zur Abgabe des Waschwassers (25) zugeordnet ist.

8. Anhängertank (1) nach einem oder mehreren der vorhergehenden Ansprüche, wobei das zweite Volumen (10) auf dem linken Abschnitt des Grundrahmens (2) angeordnet ist, der in Bezug auf die normale Laufrichtung des Anhängertanks (1) definiert ist.

9. Anhängertank (1) nach einem oder mehreren der vorhergehenden Ansprüche, wobei die Mischanordnung (9) in mindestens zwei Mischunterbaugruppen (9) unterteilt ist, die in jeweiligen zweiten Volumina (10) untergebracht sind, wobei ein zweites Volumen (10) an einem linken Abschnitt des Grundrahmens (2) und das andere zweite Volumen (10) an einem rechten Abschnitt des Grundrahmens (2) angeordnet ist, wobei der linke Abschnitt und der rechte Abschnitt in Bezug auf die normale Laufrichtung des Anhängertanks definiert sind.

## Revendications

1. - Cuve traînée (1) pour la pulvérisation de produits phytosanitaires et fertilisants, comprenant :
- un cadre de base (2) ;
- des moyens de déplacement (3), associés audit cadre de base (2) et aptes à déplacer ledit cadre de base (2) sur le sol ;
- un réservoir (4) associé audit cadre de base (2) et définissant un premier volume (5) pour contenir un liquide (6) ;
- un ensemble de mélange (9) associé audit cadre de base (2) et reçu dans un second volume (10), ledit ensemble de mélange (9) étant apte à mélanger ledit liquide (6) avec au moins un produit phytosanitaire et/ou fertilisant (11) pour obtenir un produit à asperger (12) ;
- un ensemble de pulvérisation (16) dudit produit à asperger (12) qui est associé audit cadre de base (2) ;
- un circuit hydraulique (17), relié par dynamique des fluides audit réservoir (4), audit ensemble de mélange (9) et audit ensemble de pulvérisation (16) ;
**caractérisée par le fait qu'**elle comprend un élément d'ouverture/fermeture (13) dudit second volume (10), ledit élément d'ouverture/fermeture (13) étant déplaçable entre une configuration d'ouverture, dans laquelle ledit second volume (10) est ouvert pour l'accès audit ensemble de mélange (9), et une configuration de fermeture, dans laquelle ledit second volume (10) est fermé ;
ledit réservoir (4) et ledit élément d'ouverture/fermeture (13) dans ladite configuration de fermeture définissant une surface supérieure globale (15) de conformation sensiblement convexe ; et
ledit second volume (10) s'étendant vers le haut, dudit cadre de base (2) à ladite surface supérieure globale (15) .

2. - Cuve traînée (1) selon la revendication 1, dans laquelle ledit réservoir (4) a au moins une ouverture de remplissage (7) avec laquelle un organe de fermeture (8) est susceptible d'être associé.

3. - Cuve traînée (1) selon une ou plusieurs des revendications précédentes, dans laquelle ledit circuit hydraulique (17) comprend :
- au moins un premier canal (18), qui s'étend entre ledit réservoir (4) et ledit ensemble de mélange (9) ;
- au moins un second canal (19), qui s'étend entre ledit ensemble de mélange (9) et ledit ensemble de pulvérisation (16).

4. - Cuve traînée (1) selon une ou plusieurs des revendications précédentes, dans laquelle ledit circuit hydraulique (17) comprend un dispositif de pompage (20) disposé le long d'au moins l'un dudit premier canal (18) et dudit second canal (19).

5. - Cuve traînée (1) selon une ou plusieurs des revendications précédentes, dans laquelle ledit ensemble de pulvérisation (16) comprend :
- au moins une buse de dispersion (21), adaptée pour la sortie dudit produit à asperger (12) à partir dudit circuit hydraulique (17) ;
- au moins un dispositif de dispersion (22), apte à disperser ledit produit à asperger (12) dans l'air.

6. - Cuve traînée (1) selon une ou plusieurs des revendications précédentes, dans laquelle ledit élément d'ouverture/fermeture (13) est associé avec au moins l'un dudit réservoir (4) et dudit cadre de base (2) à l'aide de moyens d'articulation (14).

7. - Cuve traînée (1) selon une ou plusieurs des revendications précédentes, dans laquelle elle comprend au moins un conteneur (24) pour contenir de l'eau de lavage (25), ledit conteneur (24) étant reçu dans ledit second volume (10) et étant associé avec au moins un robinet (26) pour distribuer ladite eau de lavage (25).

8. - Cuve traînée (1) selon une ou plusieurs des revendications précédentes, dans laquelle ledit second volume (10) est situé sur la partie gauche dudit cadre de base (2) définie par rapport au sens de déplacement normal de ladite cuve traînée (1).

9. - Cuve traînée (1) selon une ou plusieurs des revendications précédentes, dans laquelle ledit ensemble de mélange (9) est divisé en au moins deux sous-ensembles de mélange (9), reçus dans des seconds volumes respectifs (10), un second volume (10) étant placé sur une partie gauche du cadre de base (2) et l'autre second volume (10) est placé sur une partie droite dudit cadre de base (2), ladite partie gauche et ladite partie droite étant définies par rapport au sens de déplacement normal de ladite cuve tractée.
